# EUROPÄISCHE PATENTSCHRIFT

(11) **EP 2 542 382 B1**
(45) Veröffentlichungstag und Bekanntmachung des Hinweises auf die Patenterteilung: **03.05.2017**
(21) Anmeldenummer: 11713199.5
(22) Anmeldetag: 04.03.2011
(51) Int. Cl.: B24B 9/14, B24B 9/12

(54) **AUTOKALIBRIERUNG**
AUTOCALIBRATION
AUTO-ÉTALONNAGE

(30) Priorität: 04.03.2010 DE 102010010338
(43) Veröffentlichungstag der Anmeldung: 09.01.2013
(73) Patentinhaber: Schneider GmbH & Co. KG, 35112 Fronhausen (DE)
(72) Erfinder: SCHNEIDER, Gunter, 35037 Marburg (DE); GERRATH, Torsten, 35037 Marburg (DE)
(74) Vertreter: Thews, Gustav
(86) Internationale Anmeldenummer: PCT/EP2011/053325
(87) Internationale Veröffentlichungsnummer: WO 2011/107598

(56) Entgegenhaltungen:
- EP-A2- 1 250 979
- EP-A2- 2 194 359
- DE-A1- 3 827 122
- DE-A1- 19 831 304

## Beschreibung

Die Erfindung bezieht sich auf ein Verfahren zur Kalibrierung eines Fräs-, Schneid- oder Schleifwerkzeuges einer Brillenglasrandbearbeitungsmaschine bzw. ein Verfahren zum Bearbeiten einer Fläche RF bzw. Randfläche RF einer Brillenlinse unter Einsatz einer Fräs-, Schneid- oder Schleifmaschine mit mindestens einem Fräs-, Schneid- oder Schleifwerkzeug mit einer Schneidgeometrie, wobei in der Fräs-, Schneid- oder Schleifmaschine eine optische Oberfläche bzw. Randvermessungseinrichtung vorgesehen ist, bei der die Fläche RF der um eine Rotationsachse rotierenden Brillenlinse mit mindestens einem Fräs-, Schneid- oder Schleifwerkzeug bearbeitet wird und eine profilierte Flächenform an der Brillenlinse durch Rotation der Brillenlinse um die Rotationsachse und Zustellung des Fräs-, Schneid- oder Schleifwerkzeugs in radialer oder axialer Richtung hergestellt wird, und in einem weiteren Bearbeitungsschritt die so hergestellte Flächenform RF an dem Werkstück mittels der Oberflächenvermessungseinrichtung vermessen wird und anschließend ein Grad der Abweichung zwischen der so hergestellten Flächenform RF und den gewünschten Flächenform-Sollwerten ermittelt wird.
Es ist bereits ein Verfahren zur Autokalibrierung eines Drehwerkzeugs für Brillenlinsen aus der DE 60 2005 003 012 T2 bekannt. Das Verfahren sieht ein Drehen eines Prüfstücks mit einer nicht-rotationssymmetrischen Geometrie mit einem Drehmeißel, ein Vermessen der geschnittenen Geometrie des Prüfstücks an wenigstens einem Abschnitt mit einer Neigung in eine Drehrichtung um die Werkstückdrehachse, ein Analysieren der so erhaltenen Messdaten und eine Ausführung einer Kompensationssteuerung vor.

In der US 6,071,176 wird ein Kalibrierverfahren für Antriebsachsen einer Schleifmaschine beschrieben, bei dem zwecks Kalibrierens der jeweiligen Achse bzw. zwecks Ausmessens des jeweiligen Achsfehlers das Schleifwerkzeug in zwei Achsen bewegt und eine Bearbeitungsnut erzeugt wird, wobei eine Abweichung zwischen dem erreichten Verlauf der Bearbeitungsnut und einem Sollmaß für den jeweilige Achsverlauf ausgewertet wird.

Die aus der DE 197 38 668 A1 bekannte Brillenglasbearbeitungsmaschine weist einen Fingerfräser zum vollständigen Bearbeiten des Brillenglasrandes auf. Mittels des Fingerfräsers werden eine Umfangsnut und eine Dachfacette am Brillenglasrand hergestellt. Alternativ wird ein Kombinationswerkzeug beschrieben, welches verschiedene Werkzeugteile mit unterschiedlicher Form, z. B. Fingerfräser und Schleifscheibe, auf einer gemeinsamen Welle aufweist. Zwecks Bearbeitung des Randes werden die verschiedenen Werkzeugteile nacheinander eingesetzt.

Aus der US 2006/0276106 A1 ist ein Verfahren zum Bearbeiten eines Randes eines Brillenglases bekannt, bei dem zunächst eine Fase angearbeitet und anschließend die erreichte Geometrie zwecks Abstimmung mit der vorliegenden Geometrie des Rahmens vermessen wird. Vor der Bearbeitung des Brillenglases erfolgt keine Vermessung des Brillenglases. Gleiches gilt für die DE 38 27 122 A1.

Die DE 198 04 455 C2 beschreibt das Vermessen des Rahmens sowie des Werkzeuges vor der Bearbeitung des Brillenglases zwecks Abstimmung der notwendigen Werkzeugbewegung. Vor der Bearbeitung des Brillenglases erfolgt keine Vermessung des Brillenglases.

Die DE 100 49 382 A1 beschreibt eine optoelektronische Messanordnung zur Vermessung der Geometrie von Linsenrändern auf Basis des Triangulationsverfahrens zwecks Ausrichtung derselben zum Einsetzen in eine Brillenfassung. Diese Art der Vermessung erfolgt, nachdem das Brillenglas inklusive Rand fertig bearbeitet ist.

Aus der EP 1 250 979 A2 ist ein Verfahren bekannt, bei dem in einem ersten Schritt eine Vorbearbeitung des Linsenrandes erfolgt, in einem zweiten Schritt ein Vermessen des Linsenrandes erfolgt und in einem dritten Schritt eine weitere Bearbeitung des Linsenrandes erfolgt.

Aus der DE 38 27 122 A1 ist nur ein einziger Vermessungsschritt für den Linsenrand beschrieben, der entweder während des Vorschliffs oder nach dem Vorschliff erfolgt.

Ränder von Brillengläsern weisen betreffend die Genauigkeit der Oberfläche weitaus geringere Anforderungen auf als die optischen Flächen, also die Vorder- und Rückseite selbst. Sie können daher mittels Schleif- und/oder Fräswerkzeugen in die endgültige Form mit der gewünschten Geometrie gebracht werden.

Zwecks Aufnahme in entsprechend geformte Fassungen weisen die Ränder von Brillengläsern mitunter komplexe Geometrien auf, so dass insbesondere beim Einsatz von klassischen Fräswerkzeugen wie vorstehend erläutert mehrere Verfahrensschritte zur Erzeugung solcher komplexer Geometrien notwendig sind. Zwecks Verringerung der Prozesszeiten finden auch Schleifwerkzeuge Anwendung, deren Geometrie der komplex ausgebildeten Randform RF zumindest teilweise angepasst ist. Da die Brillengläser aus Kunststoff gebildet sind, sind die Standzeiten der Werkzeuge sehr hoch. Die technischen Geometriedaten der eingesetzten Werkzeuge wie Schaftlänge, Radius etc. sind bekannt oder werden vor dem Einbau manuell vermessen, so dass die relative Lage des eingespannten Werkzeugs rechnerisch ermittelt wird. Das Brillenglas muss über die so hergestellte Randfläche nur gehalten werden. Geschlossene Brillenfassungen sind in der Regel ebenfalls anpassungsfähig und werden im Falle von Kunststoff zwecks Einsetzens des Brillenglases erwärmt, so dass eine Anpassung an die Randform RF einhergeht. Optische Eigenschaften der Randfläche müssen nicht berücksichtigt werden.

Der Erfindung liegt die Aufgabe zugrunde, ein Verfahren zur Randbearbeitung von Brillenlinsen derart auszubilden, dass ein optimales Arbeitsergebnis gewährleistet ist.

Gelöst wird die Aufgabe erfindungsgemäß durch das Verfahren nach Anspruch 1 bzw. durch das Verfahren nach Anspruch 4. Zwecks Kalibrierung der eingesetzten Werkzeuge wurden bis dato taktile Messinstrumente bzw. Oberflächen-Taster verwendet. Mit einem Oberflächen-Taster lässt sich aber nur eine Oberfläche vermessen. Auch wenn die Vermessung nahe am Rand der Oberfläche stattfindet, so ist eine Vermessung des linienförmigen Randes der Oberfläche selbst nicht möglich. Hierfür bestand in der Vergangenheit auch kein Anlass, weil von einer Adaption des Brillenrahmens auszugehen ist. Durch Anwendung des erfindungsgemäßen Verfahrens, bei dem in einem ersten Bearbeitungsschritt vor der Anformung einer Rand- oder Flächenform RF durch das Fräs-, Schneid- oder Schleifwerkzeug die Brillenlinse mittels einer optischen Vermessungseinrichtung vermessen wird und anschließend die Anformung einer Rand- oder Flächenform RF durch das Fräs-, Schneid- oder Schleifwerkzeug erfolgt und sodann die erzeugte Rand- oder Flächenform RF, insbesondere die damit erzeugten Kanten K mittels der optischen Vermessungseinrichtung vermessen werden, lässt sich ein Grad der Abweichung zwischen der so hergestellten Flächen- oder Randform RF und den gewünschten Flächen- oder Randform-Sollwerten ermitteln und mithin das Werkzeug zumindest durch Anpassung der Soll- oder Regelgrößen der Steuerung kalibrieren. Somit wird ein höchstes Maß an Genauigkeit bei der Randbearbeitung gewährleistet, so dass der nachfolgende Einpassungsschritt wesentlich einfacher zu handhaben ist.

Dieser Vorgehensweise liegt zum einen das erfindungsgemäße Verfahren zugrunde, nach dem vor der Anformung einer Form bzw. Randform RF durch das Fräs- oder Schleifwerkzeug in einem dem Bearbeitungsschritt vorangehenden ersten Schritt die Brillenlinse bzw. das zu bearbeitende Halbzeug mittels der Oberflächen- bzw. Randvermessungseinrichtung vermessen und die Ist-Lage der Flächen und Kanten K bestimmt wird. Anschließend erfolgt die Anpassung der Solldaten der Maschinensteuerung auf Basis des Grades der Abweichung zwecks Berücksichtigung der werkzeugseitigen Schwankungen und Optimierung der herzustellenden Form RF.

Die Geometrie der jeweiligen Werkzeugschneide ließe sich alternativ mittels eines optischen oder taktilen Verfahrens ermitteln, so dass darauf aufbauend die am Werkstück herstellbare Form ermittelt werden könnte. Bei einem solchen Verfahren wären jedoch weitere Einflüsse auf die letztlich hergestellte Form nicht berücksichtigt, wie die Durchbiegung bzw. Verformung des Werkstücks oder des Werkzeugs aufgrund der Schneidbelastung und/oder bestehende Schwingungen sowohl werkzeug- als auch werkstückseitig.

Erfindungsgemäß werden alle werkzeugseitigen Faktoren, die Einfluss auf die letztlich hergestellte Form der Oberfläche bzw. des Randes haben, berücksichtigt, so dass ein optimales Bearbeitungsergebnis erhalten wird. Auch werkstückseitige Faktoren wie Abweichungen von der Form oder der Einspannung bzw. Lage können durch diese Art der Einmessung berücksichtigt werden. Damit einher gehen auch Vorteile betreffen den jeweiligen Werkzeug-Anfahrprozess, der in Kenntnis der tatsächlichen Werkzeuggeometrie wesentlich schneller und vor allem genauer erfolgen kann.

Zum anderen bedarf es einer Vorrichtung zum Anarbeiten von Kanten, Fasen und/oder Nuten an Ränder von Brillengläsern, ein sogenannter Edger, der ein optisches Vermessungssystem zum Vermessen von Flächen- und/oder Kanten K des Brillenglases aufweist, das das Vermessen vor und/oder nach der Bearbeitung des Brillenglases gewährleistet. Von Vorteil ist insbesondere die Vermessung der Kanten K einer oder zumindest einem Teil der vorliegenden Oberflächen, was mit einem System, das nach dem Funktionsprinzip eines optischen Mikrometers arbeitet, gewährleistet ist.

Hierzu kann es vorteilhaft sein, wenn das Ermitteln des Grades der Abweichung für das jeweilige Fräs-, Schneid- oder Schleifwerkzeug getrennt ausgeführt werden. Somit lassen sich die möglicherweise vorliegenden Abweichungen für jedes Werkzeug getrennt ermitteln, was im Fall einer Kumulation von Abweichungen mehrerer Werkzeuge schwieriger sein kann.

Ferner kann es vorteilhaft sein, wenn das Ermitteln des Grades der Abweichung für das Werkzeug nur einmal, nach dem Einsetzen desselben in die Fräs-, Schneid- oder Schleifmaschine oder zweimal pro Tag, einmal pro Tag, alle zwei Tage oder nach einer definierten Anzahl von bearbeiteten Werkstücken wiederholt werden. Somit können weitere Einflussgrößen auf die hergestellte Form RF bzw. die Randform RF, wie beispielsweise Verschleißerscheinungen des Werkzeugs, erkannt werden.

Vorteilhaft kann es auch sein, wenn die bestehenden Abweichungen zwischen der Flächen- oder Randform RF und der Sollform spezifiziert werden nach folgenden Ursachen:
1) Schwingungen des Werkzeugs und/oder des Werkstücks,
2) Fehler einer Bewegungsachse,
3) bestehender Verschleiß des Werkzeugs bzw. einer Werkzeugschneide oder einer Schneid- bzw. Schleifgeometrie und/oder
4) Verformung der Brillenlinse durch die Einspannung.
Sollte die relative Lage zwischen der insgesamt hergestellten Form RF und der Linse Abweichungen aufweisen, so läge dies in einem Fehler einer oder mehrerer der Bewegungsachsen nach Ziff. 2) begründet. Wenn die hergestellten Nuten oder Fasen Welligkeiten aufweisen, was auf verschiedene Geometrieanteile der Form RF beschränkt sein kann, so deutet dies auf eine Ursache nach Ziff. 1) hin. Die Ursache nach Ziff. 3) führt ebenfalls zu Abweichungen eines oder mehrerer Geometrieanteile der Form RF, weil das jeweils eingesetzte Werkzeug Abnutzungserscheinungen aufweist. Insbesondere die hergestellten Ecken bzw. Innenkanten weisen nicht die gewünschte Ausprägung auf, d. h. der Innenradius ist zu groß, weil die Werkzeugkante zu stark abgenutzt ist. Sollte sich eine Ursache nach Ziff. 4) einstellen, weil die Linse innerhalb der axialen Einspannung verformt wird, so ergeben sich Abweichungen insbesondere in den am stärksten gekrümmten Geometrieanteilen.

Dabei kann es vorteilhafterweise vorgesehen sein, dass zwecks Spezifizierung der Ursache "Verschleiß der Werkzeugschneide" auch die Oberflächenrauigkeit der Oberfläche zumindest teilweise erfasst bzw. ermittelt wird und beim Überschreiten eines definierten Grenzwertes für die Oberflächenrauigkeit das Werkzeug als "nachzuschleifen" oder "auszutauschen" eingestuft wird. Ein Verschleiß der Werkzeugschneiden ließe sich mit Ausnahme der Werkzeugecken über vorstehend genannte Bewertung der Form RF bzw. der Geometrieanteile weniger gut ermitteln. Die Bewertung der Oberflächenrauigkeit stellt hierfür das probatere Mittel dar.

Ferner kann es vorteilhafterweise vorgesehen sein, dass als Werkstück eine Brillenlinse oder eine Prüfscheibe verwendet wird oder dass die Prüfscheibe zylinderförmig ausgebildet ist. Der Profilverlauf der herzustellenden Randform RF wird der ebenen Umfangsgeometrie des Zylinders nach zweidimensional ausgebildet, d. h. eine Relativbewegung zwischen dem Werkzeug und dem Werkstück in eine Richtung parallel zur Rotationsachse des Werkstücks entfällt in diesem Fall. Damit geht eine vereinfachte Erfassung und Auswertung der Randform RF einher, weil aufgrund der flachen, zylinderförmigen Form bestehende Abweichungen der angeformten Geometrien von der Sollform einfacher auszuwerten sind. Eine einfachere Auswertung ist aber auch bei Verwendung von Brillenlinsen mit einfacherer Geometrie möglich, die bspw. eine entsprechend kreisringförmige Randfläche aufweisen. Grundsätzlich ist eine Auswertung aber auch mit Brillenlinsen möglich, die eine räumlich gekrümmte Fläche RF oder Randform RF aufweisen.

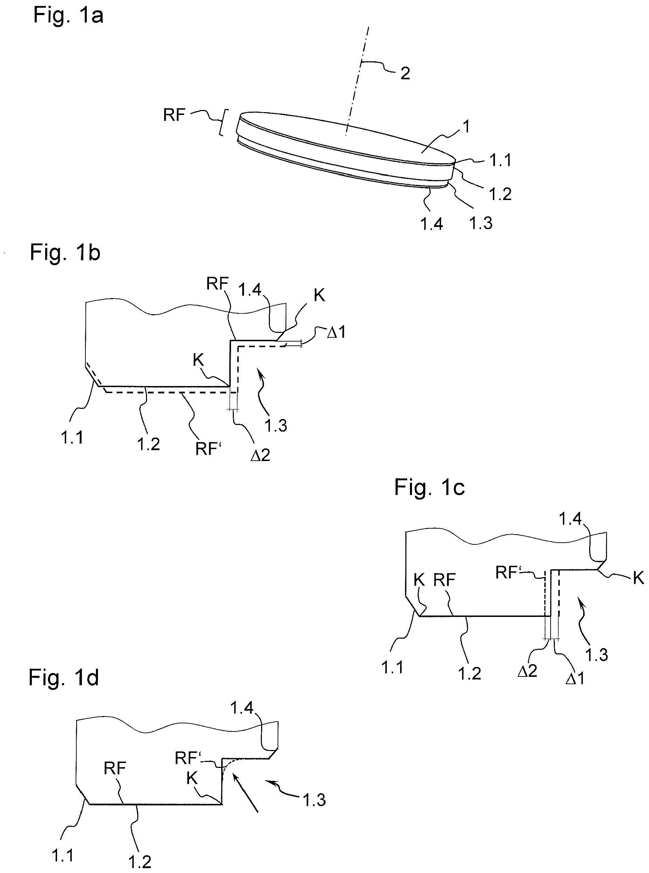

Weitere Vorteile und Einzelheiten der Erfindung sind in den Patentansprüchen und in der Beschreibung erläutert und in den Figuren dargestellt. Es zeigen Figuren 1a - 1d verschiedene Prinzipskizzen zu verschiedenen Fehlerursachen.

Eine spezielle Art der Form RF ist die Randform RF einer Linse 1 mit einer Rotationsachse 2. Die Randform RF nach Figur 1a bzw. den Figuren 1b - 1d weist vier Flächenformen oder Geometrieanteile 1.1 - 1.4 auf, die jeweils durch eine Kante K begrenzt sind. Die Kante K ist ein Teil der jeweiligen Flächen- bzw. Randform RF. Eine erste Fase 1.1 am Rand, einen ersten koaxialen Flächenanteil 1.2, eine Nut 1.3 und eine zweite Fase 1.4. Die Linse 1 ist entgegen der Darstellung nach der Randbearbeitung in der Regel nicht rotationssymmetrisch.

Nach Figur 1b weist die relative Lage einer Randform RF' insgesamt, also mit allen Geometrieanteilen 1.1 - 1.4, eine Abweichung Δ1 in radialer Richtung und eine Abweichung Δ2 in axialer Richtung auf, gemessen von der jeweiligen Kante K. Dies kann zurückzuführen sein auf eine Ursache nach Ziff. 2) des Beschreibungsteils, wonach Fehler in den Bewegungsachsen vorliegen. Die vorliegende Darstellung ist summarisch. Es können auch Fehler in nur einer Achse und daraus resultierende Abweichungen zustande kommen.

Nach Figur 1c weist der Geometrieanteil 1.3 der Randform RF', also die Nut 1.3, über den Umfang Abweichungen Δ1, Δ2 in axialer Richtung auf, was letztlich eine Welligkeit der Nutflanken über den Umfang begründet und auf eine Ursache nach Ziff. 1), nämlich Schwingungen des Werkzeugs in axialer Richtung, zurückzuführen ist.

Nach Figur 1d ist ein Radius R der hergestellten Innenecke der Randform RF' undefiniert und zu groß. Dies deutet auf eine Ursache nach Ziff. 3) hin, wonach das Fräs- oder Schleifwerkzeug Verschleißerscheinungen im Bereich der Ecke aufweist.

Vorstehend beispielhaft beschriebene Abweichungen können auch in verschiedenen Teilkombinationen auftreten. Die damit einhergehenden Abweichungsmuster sind entsprechend überlagert.

### Bezugszeichenliste

- 1: Linse, Brillenlinse
- 1.1: erste Fase
- 1.2: erster koaxialer Flächenanteil
- 1.3: Nut, zweiter koaxialer Flächenanteil
- 1.4: zweite Fase
- 2: Rotationsachse

- K: Kante
- R: Radius
- RF: Form, Randform, Flächenform, Randfläche
- RF': Form, Randform mit Abweichungen Δ1 und Δ2
- Δ1: Abweichung
- Δ2: Abweichung

## Patentansprüche

1. Verfahren zur Kalibrierung eines Fräs-, Schneid- oder Schleifwerkzeuges einer Brillenglasrandbearbeitungsmaschine, wobei
a) in einem ersten Bearbeitungsschritt vor der Anformung einer Rand- oder Flächenform RF durch das Fräs-, Schneid- oder Schleifwerkzeug das Werkstück mittels einer optischen Vermessungseinrichtung vermessen wird,
b) die Anformung einer Rand- oder Flächenform RF durch das Fräs-, Schneid- oder Schleifwerkzeug erfolgt,
c) die erzeugte Rand- oder Flächenform RF mittels der optischen Vermessungseinrichtung vermessen wird,
d) eine Abweichung zwischen der so hergestellten Flächen- oder Randform RF und den gewünschten Flächen- oder Randform-Sollwerten ermittelt wird;
e) mithin das Werkzeug zumindest durch Anpassung der Regelgrößen kalibriert wird.

2. Verfahren nach Anspruch 1,
**dadurch gekennzeichnet,**
**dass** eine Vermessungseinrichtung verwendet wird, die zur Vermessung von Brillenglaskanten geeignet ist.

3. Verfahren nach Anspruch 2,
**dadurch gekennzeichnet,**
**dass** ein optisches Mikrometer verwendet wird.

4. Verfahren zum Bearbeiten einer Fläche RF einer Brillenlinse (1) unter Einsatz einer Fräs-, Schneid- oder Schleifmaschine mit mindestens einem Fräs-, Schneid- oder Schleifwerkzeug mit einer Schneidgeometrie, wobei in der Fräs-, Schneid- oder Schleifmaschine eine optische Vermessungseinrichtung vorgesehen ist,
bei dem
a) die Fläche RF der um eine Rotationsachse rotierenden Brillenlinse (1) mit mindestens einem Fräs-, Schneid- oder Schleifwerkzeug bearbeitet wird und eine profilierte Flächenform an der Brillenlinse (1) durch Rotation der Brillenlinse (1) um die Rotationsachse und Zustellung des Fräs-, Schneid- oder Schleifwerkzeugs in radialer oder axialer Richtung hergestellt wird,
b) in einem weiteren Bearbeitungsschritt die so hergestellte Flächenform RF an dem Werkstück mittels der optischen Vermessungseinrichtung vermessen wird;
c) anschließend ein Grad der Abweichung zwischen der so hergestellten Flächen- oder Randform RF und den gewünschten Flächen- oder Randform-Sollwerten ermittelt wird;
**dadurch gekennzeichnet, dass** d) vor der Anformung einer Rand- oder Flächenform RF durch das Fräs-, Schneid- oder Schleifwerkzeug in einem dem Bearbeitungsschritt vorangehenden ersten Schritt die Brillenlinse mittels der Vermessungseinrichtung vermessen wird,
e) die Solldaten der Maschinensteuerung auf Basis der Abweichung zwecks Berücksichtigung der werkzeugseitigen Schwankungen und Optimierung der herzustellenden Rand- oder Flächenformen RF angepasst werden.

5. Verfahren nach einem der Ansprüche 1 bis 4,
**dadurch gekennzeichnet,**
**dass** das Ermitteln des Grades der Abweichung für das jeweilige Fräs-, Schneid- oder Schleifwerkzeug getrennt ausgeführt wird.

6. Verfahren nach einem der Ansprüche 1 bis 5,
**dadurch gekennzeichnet,**
**dass** das Ermitteln des Grades der Abweichung für das jeweilige Fräs-, Schneid- oder Schleifwerkzeug - nur einmal, nach dem Einsetzen desselben in die Fräs-, Schneid- oder Schleifmaschine oder - zweimal pro Tag, einmal pro Tag, alle zwei Tage oder nach einer definierten Anzahl von bearbeiteten Brillenlinsen (1) wiederholt wird.

7. Verfahren nach einem der Ansprüche 1 bis 6,
**dadurch gekennzeichnet,**
**dass** die bestehenden Abweichungen zwischen der Flächen- oder Randform RF und der Sollform spezifiziert werden nach folgenden Ursachen:
- Schwingungen des Werkzeugs und/oder der Brillenlinse (1),
- Fehler einer Bewegungsachse,
- bestehender Verschleiß eines Werkzeugs und/oder
- Verformung der Brillenlinse (1) durch die Einspannung.

8. Verfahren nach Anspruch 7,
**dadurch gekennzeichnet,**
**dass** zwecks Spezifizierung der Ursache "Verschleiß der Werkzeugschneide" auch die Oberflächenrauigkeit der Fläche oder Randfläche zumindest teilweise ermittelt wird und beim Überschreiten eines definierten Grenzwertes für die Oberflächenrauigkeit das Werkzeug als "nachzuschleifen" oder "auszutauschen" eingestuft wird.

9. Verfahren nach Anspruch 1,
**dadurch gekennzeichnet,**
**dass** als Werkstück eine Brillenlinse (1) oder eine Prüfscheibe verwendet wird.

10. Verfahren nach Anspruch 9,
**dadurch gekennzeichnet,**
**dass** die Prüfscheibe zylinderförmig ausgebildet ist.

## Claims

1. A method for calibrating a milling, cutting or grinding tool of a spectacle lens edge machining apparatus,
wherein
a) the workpiece is measured by means of an optical measuring device prior to forming an edge or surface shape RF by the milling, cutting or grinding tool in a first machining step;
b) an edge or surface shape RF is formed by the milling, cutting or grinding tool;
c) the created edge or surface shape RF is measured by means of the optical measuring device;
d) a deviation of the surface or edge shape RF created in this way from the desired surface or edge shape setpoints is determined;
e) thus
the tool is calibrated at least by adjusting the control variables.

2. The method according to Claim 1,
**characterized in**
**that** a measuring device suitable for measuring spectacle lens edges is used.

3. The method according to Claim 2,
**characterized in**
**that** an optical micrometer is used.

4. A method for machining a surface RF of a spectacle lens (1) using a milling, cutting or grinding machine having at least one milling, cutting or grinding tool having a cutting geometry, wherein an optical measuring device is provided in the milling, cutting or grinding machine,
in which
a) the surface RF of the spectacle lens (1) rotating about an axis of rotation is machined with at least one milling, cutting or grinding tool and a profiled surface form on the spectacle lens (1) is created by rotating the spectacle lens (1) about the axis of rotation and feeding the milling, cutting or grinding tool in a radial or axial direction;
b) the surface shape RF on the workpiece created in this way is measured by means of the optical measuring device in a further machining step;
c) a degree of deviation of the surface or edge shape RF created in this way from the desired surface form or edge shape values is subsequently determined;
**characterized in that**
d) the spectacle lens is measured by means of the measuring device prior to forming an edge or surface shape RF by the milling, cutting or grinding tool in a first step preceding the machining step;
e) the scheduled data of machine control are adjusted on the basis of deviation for the purpose of taking account of the tool-related variations and optimizing the edge or surface shapes RF to be created.

5. The method according to any one of Claims 1 to 4,
**characterized in**
**that** the degree of deviation is determined separately for the respective milling, cutting or grinding tool.

6. The method according to any one of Claims 1 to 5,
**characterized in**
**that** the determination of the degree of deviation for the respective milling, cutting or grinding tool is repeated
- only once, after inserting said tool into the milling, cutting or grinding machine, or
- twice a day, once a day, every two days, or after a defined number of machined spectacle lenses (1).

7. The method according to any one of Claims 1 to 6,
**characterized in**
**that** the existing deviations of the surface or edge shape RF from the desired shape are specified according to the following reasons:
- oscillations of the tool and/or of the spectacle lens (1),
- error of an axis of movement,
- existing wear of a tool and/or,
- deformation of the spectacle lens (1) caused by clamping.

8. The method according to Claim 7,
**characterized in**
**that** for the purpose of specifying the reason "wear of tool lip", also the surface roughness of the surface or edge surface is at least partially determined and the tool is classified as "to be reground" or "to be replaced" if a defined limiting value of surface roughness is exceeded.

9. The method according to Claim 1,
**characterized in**
**that** a spectacle lens (1) or a test disk is used as a workpiece.

10. The method according to Claim 9,
**characterized in**
**that** the test disk is cylindrical.

## Revendications

1. Procédé de calibrage d'un outil de fraisage, de coupe ou de meulage pour une machine d'usinage de bords de verre de lunette,
dans lequel
a) la pièce à usiner est mesurée au moyen d'un dispositif de mesure lors d'une première étape d'usinage avant le façonnage d'une forme de bord ou de surface RF par l'outil de fraisage, de coupe ou de meulage ;
b) le façonnage d'une forme de bord ou de surface RF est réalisée par l'outil de fraisage, de coupe ou de meulage ;
c) la forme de bord ou de surface RF réalisée est mesurée au moyen d'un dispositif de mesure optique ;
d) un écart entre la forme de bord ou de surface RF produite et les cotes théoriques souhaitées est calculé et
e) ainsi
l'outil est calibré au moins par un ajustement des grandeurs de réglage.

2. Procédé selon la revendication 1,
**caractérisé en ce que**
la mesure des arêtes des verres de lunette est effectuée au moyen d'un dispositif de mesure adapté.

3. Procédé selon la revendication 2,
**caractérisé en ce qu'**un
micromètre optique est utilisé.

4. Procédé d'usinage d'une face RF d'un verre de lunette (1) utilisant une machine de fraisage, de coupe ou de meulage avec au moins un outil de fraisage, de coupe ou de meulage doté d'une géométrie de coupe, un dispositif de mesure optique étant prévu pour ladite machine de fraisage, de coupe ou de meulage,
dans lequel
a) la face RF du verre de lunette (1) en rotation autour d'un axe de rotation est usinée à l'aide d'au moins un outil de fraisage, de coupe ou de meulage et une face latérale profilée sur le verre de lunette (1) est produite par rotation du verre de lunette (1) autour de l'axe de rotation et par déplacement de l'outil de fraisage, de coupe ou de meulage dans une direction radiale ou axiale ;
b) ladite forme de surface RF produite sur la pièce à usiner est, lors d'une étape d'usinage ultérieure, mesurée au moyen d'un dispositif de mesure optique ;
c) une valeur de l'écart entre ladite forme de bord ou de surface RF produite et les cotes théoriques souhaitées est ensuite calculée ;
**caractérisé en ce que**
d) le verre de lunette est mesurée au moyen d'un dispositif de mesure lors d'une première étape précédant celle d'usinage et avant la formation d'une forme de bord ou de surface RF par l'outil de fraisage, de coupe ou de meulage ;
e) les données théoriques de la commande de machine se fondant sur l'écart sont ajustées afin de tenir compte des variations du côté de l'outil et d'optimiser la forme de bord ou de surface RF à produire.

5. Procédé selon l'une des revendications 1 à 4,
**caractérisé en ce que**
le calcul de la valeur de l'écart pour chaque outil de fraisage, de coupe ou de meulage est effectué séparément.

6. Procédé selon l'une des revendications 1 à 5,
**caractérisé en ce que**
le calcul de la valeur de l'écart pour chaque outil de fraisage, de coupe ou de meulage
- est soit effectué une seule fois, après mise en place dudit outil dans la machine de fraisage, de coupe ou de meulage ;
- soit répété deux fois par jour, une fois par jour, une fois tous les deux jours ou en fonction d'un nombre défini de verres de lunette (1) usinés.

7. Procédé selon l'une des revendications 1 à 6,
**caractérisé en ce que**
les écarts existants entre la forme de bord ou de surface RF et la forme théorique sont expliqués par les causes suivantes :
- vibrations de l'outil et / ou du verre de lunette (1) ;
- défaut d'un axe de déplacement ;
- usure d'un outil ; et / ou
- déformation du verre de lunette (1) pendant la fixation.

8. Procédé selon la revendication 7,
**caractérisé en ce que**
la rugosité superficielle de la forme ou de la forme de bord est au moins partiellement calculée afin d'expliquer la cause « usure du tranchant de l'outil » et que l'outil est classé comme « à réaffûter » ou « à remplacer » dans le cas où une certaine valeur de rugosité est dépassée.

9. Procédé selon la revendication 1,
**caractérisé en ce qu'**un
verre de lunette (1) ou un disque d'essai est utilisé en tant que pièce à usiner.

10. Procédé selon la revendication 9,
**caractérisé en ce que**
le disque d'essai est de forme cylindrique.
